# EUROPÄISCHE PATENTSCHRIFT

(11) **EP 1 448 411 B1**
(45) Veröffentlichungstag und Bekanntmachung des Hinweises auf die Patenterteilung: **27.04.2005**
(21) Anmeldenummer: 02791741.8
(22) Anmeldetag: 29.11.2002
(51) Int. Cl.: B60R 21/20

(54) **INSASSENSCHUTZVORRICHTUNG FÜR EIN FAHRZEUG**
OCCUPANT-PROTECTION DEVICE FOR A VEHICLE
DISPOSITIF DE PROTECTION D'UN PASSAGER DANS UN VEHICULE

(30) Priorität: 30.11.2001 DE 10158675
(43) Veröffentlichungstag der Anmeldung: 25.08.2004
(73) Patentinhaber: ACTS-Advanced Car Technology Systems GmbH & Co.KG, 63877 Sailauf (DE)
(72) Erfinder: SCHÖNEKÄS, André, 63776 Mömbris (DE); ARLETH, Matthias, 63801 Kleinostheim (DE); SCHMIDT, Werner, 63755 Alzenau (DE); KARL, Steffen, 97833 Frammersbach (DE); ZECHMANN, Jörg, 63773 Goldbach (DE); SZIDZEK, Markus, 63785 Obernburg (DE)
(74) Vertreter: Pfiz, Thomas, Dr.
(86) Internationale Anmeldenummer: PCT/EP2002/013501
(87) Internationale Veröffentlichungsnummer: WO 2003/045738

(56) Entgegenhaltungen:
- EP-A- 1 106 446

## Beschreibung

Die Erfindung betrifft eine Insassenschutzvorrichtung für ein Fahrzeug mit einer einen Airbaghalter und einen gefalteten aufblasbaren Airbag umfassenden Airbageinheit und einem aus einem formstabilen Trägerteil und einer durch den Airbag im Auslösefall aufreißbaren Verkleidung bestehenden, insbesondere durch eine Instrumententafel gebildeten Fahrzeuginnenteil zur verdeckten Aufnahme der Airbageinheit. Aus der EP 1 106 446 A ist eine solche Schutzvorrichtung bekannt, die dem Oberbegriff des Anspruchs 1 bzw. 2 entspricht.

Bei Schutzvorrichtungen dieser Art wird die Airbageinheit vom Fahrgastraum her unsichtbar in die Instrumententafel integriert, um gestalterischen Anforderungen zu genügen und zugleich rückseitigen Bauraum zu gewinnen. Der Airbag bzw. Gassack liegt dabei als Faltpaket direkt hinter der flexiblen Verkleidung, durch welche er im Auslösefall unter Aufreißen eines Austrittsbereichs hindurchdringt. Als nachteilig im Hinblick auf die optischen und haptischen Eigenschaften hat sich jedoch die direkte Abstützung der Verkleidung auf dem gefalteten Airbag erwiesen.

Ausgehend hiervon liegt der Erfindung die Aufgabe zugrunde, ein in ein Fahrzeuginnenteil integriertes Airbagsystem dahingehend zu verbessern, daß die Nachteile im Stand der Technik überwunden werden und eine gute Oberflächenqualität bei hoher Funktionssicherheit gewährleistet wird.

Zur Lösung dieser Aufgabe wird die im Patentanspruch 1 bzw. 2 angegebene Merkmalskombination vorgeschlagen. Vorteilhafte Ausgestaltungen und Weiterbildungen der Erfindung ergeben sich aus den abhängigen Ansprüchen.

Erfindungsgemäß wird vorgeschlagen, daß der Airbaghalter einen Stützdeckel zum Überspannen einer Staukammer für den Airbag aufweist, und daß der Stützdeckel von einer Decklage des Airbags zu der Verkleidung hin überdeckt ist. Dadurch wird erreicht, daß die Verkleidung vollflächig fest abgestützt wird, ohne daß elastisch nachgiebige Zonen im Bereich der Airbagfaltung auftreten. Speziell bildet der Stützdeckel eine biegesteife Widerlagerfläche gegen Intrusionen vom Fahrgastraum und gewährleistet zugleich eine gleichbleibende Haptik der Oberfläche. Auch beim Aufschäumen der Verkleidung wird eine gleichmäßige Abstützung im Schäumwerkzeug sichergestellt. Durch die über dem Stützdeckel liegende Decklage des Airbags ist eine Entfaltung ohne Absprengen des Stützdeckels möglich. Dieser kann also trägerteilfest gehalten werden, während der Airbag im Auslösefall nur die leicht aufreißbare Verkleidung durchdringen muß.

Eine Variante der Erfindung, mit der dieselben Vorteile erzielbar sind, sieht vor, daß der Airbaghalter einen von einer einzigen Decklage des Airbags zu der Verkleidung hin überdeckten Stützdeckel aufweist, und daß eine um den Stützdeckel umlaufende Staukammer für den Airbag durch einen an dem Trägerteil oder Stützdeckel angelenkten Klappdeckel überdeckt ist. Durch einen von dem Stützdeckel gesonderten Klappdeckel werden insbesondere konkave Konturgebungen ermöglicht, ohne daß diese Deckelbereiche von dem Airbag frei überspannt werden müssten. Dabei ist auch der Klappdeckel unter Freigabe eines Auslaßbereichs für den Airbag zum Fahrzeuginnenraum hin abklappbar.

Gemäß einer bevorzugten Ausgestaltung ist es vorgesehen, daß der Airbaghalter einen vorzugsweise radial offenen Ringraum als Staukammer zur Aufnahme eines ringförmigen Faltwulstes des Airbags begrenzt. Damit kann die Decklage des Airbags zentral mit Druckgas beaufschlagt werden, während die Faltlagen des Airbag-Gewebes seitlich aus dem Ringraum heraus aufgefaltet werden.

Eine weitere Verbesserung in dieser Hinsicht wird dadurch erreicht, daß der Stützdeckel einen unter Freigabe eines Auslaßbereichs für den Airbag zum Fahrzeuginnenraum hin abklappbaren, vorzugsweise umlaufenden Klapprand aufweist. Dabei ist es günstig, wenn der ringförmige Klapprand oder Klappdeckel über eine linienförmige Wandschwächung angelenkt und durch Randeinschnitte in mehrere Randsegmente unterteilt ist. Um die Biegesteifigkeit zu erhöhen, kann der Klapprand oder Klappdeckel an seiner von der Verkleidung abgewandten Rückseite durch Verstärkungsrippen ausgesteift sein. Aus Sicherheitsgründen ist es vorteilhaft, wenn der Klapprand oder Klappdeckel über eine biegeweiche Flachmaterialschicht, vorzugsweise einen aufgeklebten oder eingeformten Gewebezuschnitt an dem Stützdeckel bzw. dem Trägerteil gesichert ist.

Um den Airbag über den Stützdeckel innenseitig mit Gas beaufschlagen zu können, sieht eine vorteilhafte Ausführung vor, daß der Airbaghalter in einem Zentralbereich des Stützdeckels mit mindestens einer Durchströmöffnung, vorzugsweise einer Vielzahl von Durchströmöffnungen zum Aufblasen des Airbags versehen ist. Dabei ist es vorteilhaft, wenn die Durchströmöffnungen zur Entfaltungssteuerung des Airbags unterschiedliche Durchströmquerschnitte und/oder Ausrichtungen aufweisen und/oder räumlich ungleichmäßig verteilt angeordnet sind.

Zur trägerteilfesten Fixierung des Stützdeckels ist es von Vorteil, wenn der Airbaghalter ein mit dem Trägerteil fest verbindbares, rückseitig an dem Stützdeckel abstehendes Flanschteil aufweist.

Vorteilhafterweise begrenzt das Flanschteil einen mittels eines Gasgenerators mit Gas zum Aufblasen des Airbags beaufschlagbaren zentralen Durchströmkanal gegenüber einem umlaufenden Faltwulst des Airbags.

Eine weitere baulich vorteilhafte Ausführung sieht vor, daß das Flanschteil durch gitterförmig verlaufende Aussteifungsrippen verstärkt ist.

In einer funktionell günstigen Gestaltung ist das Flanschteil durch einen radial nach außen abgewinkelten Ringfuß gebildet. Dabei ist es vorteilhaft, wenn der Ringfuß an seiner freien Ringschulter Verbindungsmittel zur randseitigen Halterung des Airbags und zur Befestigung an dem Trägerteil aufweist.

Um ein Verkleben oder Eindringen von Schäummittel bei der Herstellung der Verkleidung zu verhindern, sieht eine weitere vorteilhafte Ausgestaltung vor, daß die Decklage des Airbags durch eine Schutzfolie gegenüber der Verkleidung abgedeckt ist.

Zur flächenbündigen Einpassung ist es vorteilhaft, wenn das Trägerteil eine der Verkleidung zugewandte ringförmige Lagerfläche zur formschlüssigen Aufnahme des Stützdeckels oder des Klappdeckels aufweist.

Vorteilhafterweise ist die vorgefertigte Airbageinheit in eine Aufnahmepartie des Trägerteils eingesetzt und durch Aufbringen der Verkleidung sichtseitig verdeckt.

Eine weitere vorteilhafte Ausführung sieht vor, daß die Verkleidung aus einer zum Fahrzeuginnenraum weisenden Dekorhaut und einer die Dekorhaut auf dem Trägerteil abstützenden geschäumten Zwischenschicht besteht, wobei die Dekorhaut im Bereich des Stützdeckels oder des Klappdeckels rückseitig durch Aufreißlinien für den Durchtritt des Airbags geschwächt ist.

Im folgenden wird die Erfindung anhand eines in der Zeichnung in schematischer Weise dargestellten Ausführungsbeispiels näher erläutert. Es zeigen
- Fig. 1: eine Insassenschutzvorrichtung eines Kraftfahrzeugs in Form einer in die Instrumententafel integrierten Airbageinheit in einem ausschnittsweisen Vertikalschnitt;

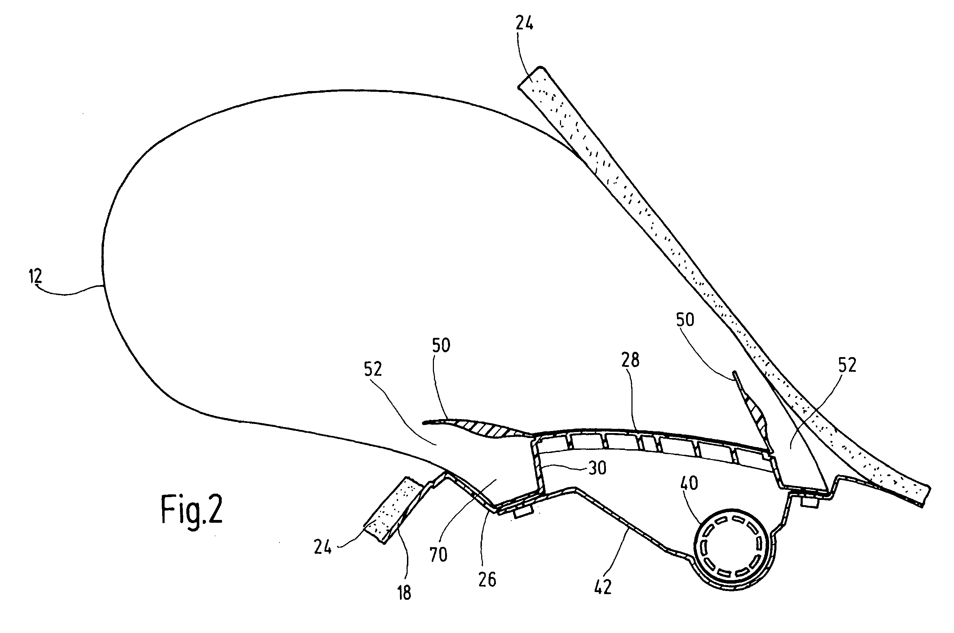

- Fig. 2: die Airbageinheit im Auslösezustand in einer Fig. 1 entsprechenden Darstellung;
- Fig. 3: eine Lupenansicht der Fig. 1;
- Fig. 4: einen Airbaghalter der Airbageinheit in einer rückseitigen perspektivischen Ansicht; und
- Fig. 5: eine weitere Ausführungsform mit einem trägerteilseitig angebrachten Klappdeckel in einem Fig. 3 entsprechenden Schnitt.

Die in der Zeichnung dargestellte Insassenschutzvorrichtung umfaßt eine durch einen Airbaghalter 10 und einen darin eingefalteten Airbag 12 gebildete Airbageinheit 14, welche auf der Beifahrerseite in eine Instrumententafel 16 eines Kraftfahrzeugs integriert ist. Die Instrumententafel 16 besteht dabei in an sich bekannter Weise aus einem formstabilen flächigen Trägerteil 18 aus Kunststoff, welches sichtseitig von einer Dekorhaut 20, insbesondere einer Slushformhaut unter Einschluß einer geschäumten Zwischenschicht 22 überdeckt ist.

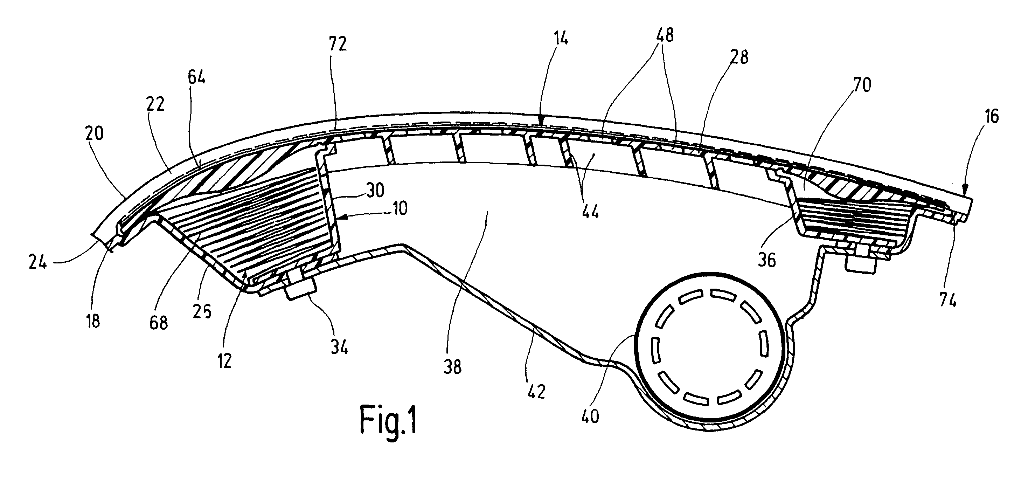

Die in Fig. 1 gezeigte Airbageinheit 14 läßt sich gesondert vorfertigen und vor dem Aufbringen der aus Dekorhaut 20 und Schaumschicht 22 bestehenden Verkleidung 24 in eine Aufnahmepartie 26 des Trägerteils 18 einsetzen. Um dabei eine durchgehende Abstützung der Verkleidung 24 zu gewährleisten, weist der Airbaghalter 10 einen Stützdeckel 28 auf, welcher die einen Durchbruch in dem Trägerteil 18 begrenzende Aufnahmepartie 26 auch im Faltbereich des Airbags 12 flächig überspannt.

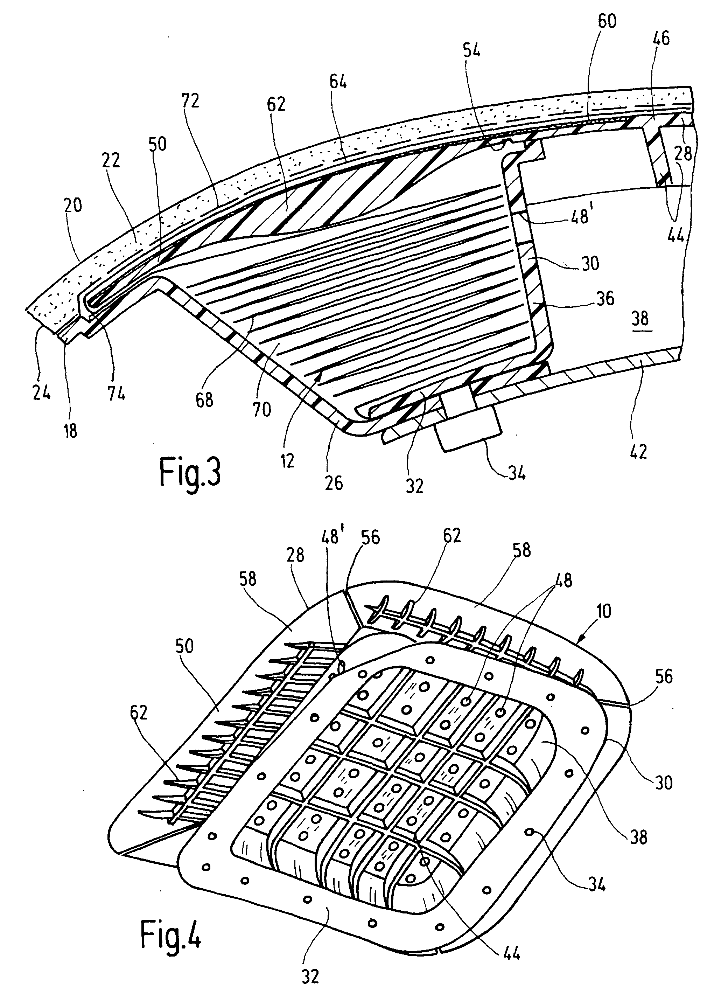

Wie auch aus Fig. 4 ersichtlich, weist der Airbaghalter 10 als insgesamt pilzförmiges Gebilde ein rückseitig an dem Stützdeckel 28 abstehendes Flanschteil 30 auf, das an dem Trägerteil 18 im Bereich der Aufnahmepartie 26 anflanschbar ist. Zu diesem Zweck ist das Flanschteil 30 durch einen radial nach außen abgewinkelten, im Querschnitt L-förmigen Ringfuß gebildet, welcher an seiner freien Ringschulter 32 über Verbindungsmittel (Befestigungszapfen 34) fest mit der Trägerpartie 26 verbindbar ist.

Mit seinem inneren, an den Stützdeckel 28 angrenzenden Ringabschnitt 36 begrenzt der Ringfuß 30 einen Durchströmkanal 38, der über einen Gasgenerator 40 mit Druckgas zum Aufblasen des Airbags 12 beaufschlagbar ist. Der Gasgenerator 40 befindet sich dabei in einer Generatorwanne 42, welche randseitig gasdicht über die Verbindungsmittel 34 des Flanschteils 30 an der Trägerpartie 26 angeschlossen ist.

Der Durchströmkanal 38 mündet über eine das Flanschteil 30 aussteifende gitterförmige Rippenstruktur 44 stirnseitig an einem Zentralbereich 46 des Stützdeckels 28, welcher von einer Vielzahl von Durchströmöffnungen 48 für den Gasauslaß durchbrochen ist. Zur Steuerung der Airbagentfaltung durch einen räumlich unterschiedlich gerichteten Gasstrom kann auch ein Wandbereich des Ringfußes 30 mit weiteren Durchströmöffnungen 48' versehen sein.

Der Stützdeckel 28 weist in seinem über den Ringabschnitt 36 des Flanschteils 30 überstehenden Bereich einen Klapprand 50 auf, der im Auslösefall zur Freigabe eines Auslaßbereichs 52 für den gefalteten Airbag 12 zum Fahrzeuginnenraum hin abklappbar ist. Zu diesem Zweck ist der Klapprand 50 über eine umlaufende linienförmige Wandschwächung 54 an dem Zentralbereich 46 des Stützdeckels 28 angelenkt. Um das Aufklappen zu erleichtern, ist der Klapprand 50 durch radiale Randeinschnitte 56 in mehrere Randsegmente 58 unterteilt. Ein Abreißen der Randsegmente 58 wird durch einen die Wandschwächung 54 übergreifenden, in den Stützdeckel 28 eingeformten Gewebezuschnitt 60 erreicht (Fig. 3). Zur Verbesserung der Biegesteifigkeit ist der Klapprand 50 an seiner von der Verkleidung 24 abgewandten Rückseite durch Verstärkungsrippen 62 ausgesteift.

Der Airbag 12 weist eine den Stützdeckel 28 vorderseitig zu der Verkleidung 24 hin überdeckende, den Deckelrand umgreifende Decklage 64 und einen daran anschließenden ringförmigen Faltwulst 68 auf. Der ringförmige Faltwulst 68 befindet sich in einer Staukammer 70, welche durch den Klapprand 50 gegenüber der Verkleidung 24 abgedeckt ist. Innen- und bodenseitig ist die Staumkammer 70 durch das Flanschteil 30 begrenzt, während die radial äußere Begrenzung im Einbauzustand durch die Aufnahmepartie 26 des Trägerteils 18 gebildet wird.

Der Airbaghalter 10 besteht als Spritzgußteil aus Kunststoff. Das Flanschteil 30 und der Stützdeckel 28 werden dabei gesondert geformt und durch Reibschweißen fest miteinander verbunden. Sodann wird der Airbag 12 mit seinem freien Rand an der Ringschulter 32 des Flanschteils 30 zweckmäßig durch die Befestigungsmittel 34 fixiert und in die Staukammer 70 eingefaltet. Zur Sicherung des Faltwulstes 68 kann ein nicht gezeigtes Papierband dienen, welches den Stauraum 70 radial nach außen verschließt. Die solchermaßen vorgefertigte Airbageinheit 14 wird dann in die Aufnahmepartie 26 des Trägerteils 18 eingesetzt, wobei eine der Verkleidung 24 zugewandte ringförmige Lagerfläche 74 des Trägerteils 18 eine flächenbündige Aufnahme des Stützdeckels 28 ermöglicht.

Das solchermaßen komplettierte Trägerteil 18 wird in einem Schäumwerkzeug mit der Dekorhaut 20 über die eingeschäumte Zwischenschicht 22 verbunden. Um ein Verkleben mit der Zwischenschicht 22 zu verhindern, wird die Decklage 64 des Airbags 12 durch eine leicht aufreißbare Schutzfolie 72, wie sie in Fig. 1 und 3 der besseren Übersichtlichkeit halber gestrichelt dargestellt ist, abgedeckt. Beim Schäumvorgang wird der Zentralbereich 46 des Stützdeckels 28 durch die Werkzeugwandung abgestützt, so daß keine Verformungen auftreten. Auf diese Weise wird eine gleichmäßige Dicke der Schaumschicht 22 gewährleistet, ohne daß Markierungen sichtbar werden. Zugleich wird ein gleichbleibend gute Haptik und Stabilität der Verkleidung 24 bei innenraumseitiger Beaufschlagung insbesondere auch im Bereich des durch den Klapprand 50 überdeckten Faltwulstes 68 sichergestellt.

Im Auslösefall wird der Gasstrom großflächig auf die Decklage 64 gelenkt, so daß die Verkleidung unter dem Entfaltungsdruck zuverlässig aufreißt. Um ein definiertes Aufreißverhalten zu erreichen, kann die Dekorhaut 20 im Bereich des Stützdeckels 28 rückseitig beispielsweise durch U-förmig verlaufende Aufreißlinien geschwächt sein. Im Zuge der Airbagentfaltung wird der Klapprand 50 aufgeklappt und so der Auslaßbereich 52 für den Faltwulst 68 vollständig freigegeben.

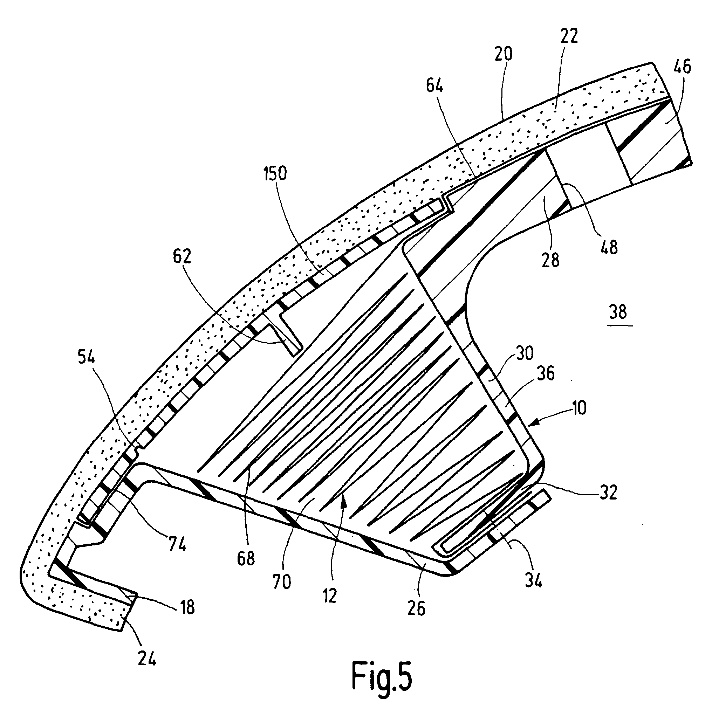

Bei der in Fig. 5 gezeigten Ausführungsform sind funktionell gleiche Teile mit gleichen Bezugszeichen wie vorstehend beschrieben angezogen. Der wesentliche Unterschied besteht darin, dass anstelle eines Klapprandes ein von dem Stützdeckel 28 gesonderter Klappdeckel 150 vorgesehen ist. Dieser Klappdeckel 150 ist an einem äußeren Randbereich 152 beispielsweise über eine Schweißverbindung in der Lagerfläche 74 des Trägerteils 18 fest gehalten. Die Wandschwächung 54 begrenzt den Randbereich 152, so dass der übrige Deckelteil durch den auslösenden Airbag 12 zum Fahrzeuginnenraum hin aufschwenkbar ist. Der Airbag 12 entfaltet sich dabei im Auslaßbereich zwischen Klappdeckel 150 und Stützdeckel 28.

## Patentansprüche

1. Insassenschutzvorrichtung für ein Fahrzeug mit einer einen Airbaghalter (10) und einen gefalteten aufblasbaren Airbag (12) umfassenden Airbageinheit (14) und einem aus einem formstabilen Trägerteil (18) und einer durch den Airbag (12) im Auslösefall aufreißbaren Verkleidung (24) bestehenden, insbesondere durch eine Instrumententafel (16) gebildeten Fahrzeuginnenteil zur verdeckten Aufnahme der Airbageinheit (14), **dadurch gekennzeichnet, daß** der Airbaghalter (10) einen eine Staukammer (70) für den Airbag (12) überspannenden Stützdeckel (28) aufweist, und daß der Stützdeckel (28) von einer Decklage (64) des Airbags (12) zu der Verkleidung (24) hin überdeckt ist.

2. Insassenschutzvorrichtung für ein Fahrzeug mit einer einen Airbaghalter (10) und einen gefalteten aufblasbaren Airbag (12) umfassenden Airbageinheit (14) und einem aus einem formstabilen Trägerteil (18) und einer durch den Airbag (12) im Auslösefall aufreißbaren Verkleidung (24) bestehenden, insbesondere durch eine Instrumententafel (16) gebildeten Fahrzeuginnenteil zur verdeckten Aufnahme der Airbageinheit (14), **dadurch gekennzeichnet, daß** der Airbaghalter (10) einen von einer Decklage (64) des Airbags (12) zu der Verkleidung (24) hin überdeckten Stützdeckel (28) aufweist, und daß eine um den Stützdeckel (28) umlaufende Staukammer (70) für den Airbag (12) durch einen an dem Trägerteil (18) oder Stützdeckel angelenkten Klappdeckel (50;150) überdeckt ist.

3. Insassenschutzvorrichtung nach Anspruch 1 oder 2, **dadurch gekennzeichnet, daß** der Airbaghalter (10) einen vorzugsweise radial offenen Ringraum als Staukammer (70) zur Aufnahme eines ringförmigen Faltwulstes (68) des Airbags (12) begrenzt.

4. Insassenschutzvorrichtung nach Anspruch 1 oder 3, **dadurch gekennzeichnet, daß** der Stützdeckel (28) einen unter Freigabe eines Auslaßbereichs (52) der Staukammer (70) für den Airbag (12) zum Fahrzeuginnenraum hin abklappbaren, vorzugsweise umlaufenden Klapprand (50) aufweist.

5. Insassenschutzvorrichtung nach einem der Ansprüche 2 bis 4, **dadurch gekennzeichnet, daß** der Klapprand (50) oder Klappdeckel (150) über eine linienförmige Wandschwächung (54) angelenkt ist.

6. Insassenschutzvorrichtung nach einem der Ansprüche 2 bis 5, **dadurch gekennzeichnet, daß** der Klapprand (50) oder Klappdeckel (150) ringförmig ausgebildet ist.

7. Insassenschutzvorrichtung nach einem der Ansprüche 2 bis 6, **dadurch gekennzeichnet, daß** der Klapprand (50) oder Klappdeckel (150) durch Randeinschnitte (56) in mehrere Randsegmente (58) unterteilt ist.

8. Insassenschutzvorrichtung nach einem der Ansprüche 2 bis 7, **dadurch gekennzeichnet, daß** der Klapprand (50) oder Klappdeckel (150) an seiner von der Verkleidung (24) abgewandten Rückseite durch Verstärkungsrippen (62) ausgesteift ist.

9. Insassenschutzvorrichtung nach einem der Ansprüche 2 bis 8, **dadurch gekennzeichnet, daß** der Klapprand (50) oder Klappdeckel (150) über eine biegeweiche Flachmaterialschicht (60), vorzugsweise einen aufgeklebten oder eingeformten Gewebezuschnitt an dem Stützdeckel (28) oder dem Trägerteil (18) gesichert ist.

10. Insassenschutzvorrichtung nach einem der Ansprüche 1 bis 9, **dadurch gekennzeichnet, daß** der Airbaghalter (10) in einem Zentralbereich (46) des Stützdeckels (28) mit mindestens einer Durchströmöffnung, vorzugsweise einer Vielzahl von Durchströmöffnungen (48) zum Aufblasen des Airbags (12) versehen ist.

11. Insassenschutzvorrichtung nach Anspruch 10, **dadurch gekennzeichnet, daß** die Durchströmöffnungen (48) zur Entfaltungssteuerung des Airbags (12) unterschiedliche Durchströmquerschnitte und/oder Ausrichtungen aufweisen und/oder räumlich ungleichmäßig verteilt angeordnet sind.

12. Insassenschutzvorrichtung nach einem der Ansprüche 1 bis 11, **dadurch gekennzeichnet, daß** der Airbaghalter (10) ein mit dem Trägerteil (18) fest verbindbares, rückseitig an dem Stützdeckel (28) abstehendes Flanschteil (30) aufweist.

13. Insassenschutzvorrichtung nach Anspruch 12, **dadurch gekennzeichnet, daß** das Flanschteil (30) einen mittels eines Gasgenerators (40) mit Gas zum Aufblasen des Airbags (12) beaufschlagbaren zentralen Durchströmkanal (38) gegenüber einem umlaufenden Faltwulst (68) des Airbags (12) begrenzt.

14. Insassenschutzvorrichtung nach Anspruch 12 oder 13, **dadurch gekennzeichnet, daß** das Flanschteil (30) durch gitterförmig verlaufende Aussteifungsrippen (44) verstärkt ist.

15. Insassenschutzvorrichtung nach einem der Ansprüche 12 bis 14, **dadurch gekennzeichnet, daß** das Flanschteil durch einen radial nach außen abgewinkelten Ringfuß (30) gebildet ist.

16. Insassenschutzvorrichtung nach Anspruch 15, **dadurch gekennzeichnet, daß** der Ringfuß (30) an seiner freien Ringschulter (32) Verbindungsmittel (34) zur Befestigung an dem Trägerteil (18) und zur randseitigen Halterung des Airbags (12) aufweist.

17. Insassenschutzvorrichtung nach einem der Ansprüche 1 bis 16, **dadurch gekennzeichnet, daß** die Decklage (64) des Airbags (12) durch eine Schutzfolie (72) gegenüber der Verkleidung (24) abgedeckt ist.

18. Insassenschutzvorrichtung nach einem der Ansprüche 1 bis 17, **dadurch gekennzeichnet, daß** das Trägerteil (18) eine der Verkleidung (24) zugewandte ringförmige Lagerfläche (74) zur formschlüssigen Aufnahme des Stützdeckels (28) oder des Klappdeckels (150) aufweist.

19. Insassenschutzvorrichtung nach einem der Ansprüche 1 bis 18, **dadurch gekennzeichnet, daß** die vorgefertigte Airbageinheit (14) in eine Aufnahmepartie (26) des Trägerteils (18) eingesetzt und durch Aufbringen der Verkleidung (24) sichtseitig verdeckt ist.

20. Insassenschutzvorrichtung nach einem der Ansprüche 1 bis 19, **dadurch gekennzeichnet, daß** die Verkleidung (24) aus einer zum Fahrzeuginnenraum weisenden Dekorhaut (20) und einer die Dekorhaut (20) auf dem Trägerteil (18) abstützenden geschäumten Zwischenschicht (22) besteht, wobei die Dekorhaut (20) im Bereich des Stützdeckels (28) oder des Klappdeckels (150) rückseitig durch Aufreißlinien für den Durchtritt des Airbags (12) geschwächt ist.

## Claims

1. Occupant protection device for a vehicle with an air bag unit (14) comprising an air bag holder (10) and a folded inflatable air bag (12), and with a vehicle interior part consisting of a dimensionally stable carrier part (18) and a casing (24), which can be torn open by the air bag (12) when triggering occurs, and formed in particular by a dashboard (16), for accommodating the air bag unit (14) in concealed fashion, **characterised in that** the air bag holder (10) comprises a support cover (28) extending over a stowage chamber (70) for the air bag (12), and that the support cover (28) is covered towards the casing (24) by a surface layer (64) of the air bag (12).

2. Occupant protection device for a vehicle with an air bag unit (14) comprising an air bag holder (10) and a folded inflatable air bag (12), and with a vehicle interior part consisting of a dimensionally stable carrier part (18) and a casing (24), which can be torn open by the air bag (12) when triggering occurs, and formed in particular by a dashboard (16), for accommodating the air bag unit (14) in concealed fashion, **characterised in that** the air bag holder (10) comprises a support cover (28) which is covered towards the casing (24) by a surface layer (64) of the air bag (12), and that a stowage chamber (70), extending around the support cover (28), for the air bag (12) is covered by a hinged cover (50; 150) which is articulated to the carrier part (18) or support cover.

3. Occupant protection device according to Claim 1 or 2, **characterised in that** the air bag holder (10) delimits an annular chamber, which is preferably radially open, as a stowage chamber (70) for accommodating an annular folded bead (68) of the air bag (12).

4. Occupant protection device according to Claim 1 or 3, **characterised in that** the support cover (28) has a hinged rim (50), preferably extending all round, which can be swung out towards the vehicle interior while clearing an exit area (52) of the stowage chamber (70) for the air bag (12).

5. Occupant protection device according to any one of Claims 2 to 4, **characterised in that** the hinged rim (50) or hinged cover (150) is articulated via a linear wall weakening (54).

6. Occupant protection device according to any one of Claims 2 to 5, **characterised in that** the hinged rim (50) or hinged cover (150) is of annular formation.

7. Occupant protection device according to any one of Claims 2 to 6, **characterised in that** the hinged rim (50) or hinged cover (150) is divided by rim notches (56) into a plurality of rim segments (58).

8. Occupant protection device according to any one of Claims 2 to 7, **characterised in that** the hinged rim (50) or hinged cover (150) is reinforced by reinforcing ribs (62) at its back, which is remote from the casing (24).

9. Occupant protection device according to any one of Claims 2 to 8, **characterised in that** the hinged rim (50) or hinged cover (150) is secured to the support cover (28) or the carrier part (18) via a flexible flat material layer (60), preferably a fabric blank which is stuck on or shaped in.

10. Occupant protection device according to any one of Claims 1 to 9, **characterised in that** the air bag holder (10) is provided in a central area (46) of the support cover (28) with at least one flow opening, preferably a plurality of flow openings (48), for inflating the air bag (12).

11. Occupant protection device according to Claim 10, **characterised in that** the flow openings (48) have different flow cross sections and/or orientations and/or are distributed in non-uniform fashion in space in order to control the deployment of the air bag (12).

12. Occupant protection device according to any one of Claims 1 to 11, **characterised in that** the air bag holder (10) comprises a flange part (30) which can be firmly joined to the carrier part (18) and projects from the support cover (28) at the back.

13. Occupant protection device according to Claim 12, **characterised in that** the flange part (30) delimits a central flow channel (38), to which gas can be admitted by means of a gas generator (40) to inflate the air bag (12), with respect to a circumferential folded bead (68) of the air bag (12).

14. Occupant protection device according to Claim 12 or 13, **characterised in that** the flange part (30) is reinforced by reinforcing ribs (44) extending in the shape of a grid.

15. Occupant protection device according to any one of Claims 12 to 14, **characterised in that** the flange part is formed by an annular foot (30) which is angled radially outwards.

16. Occupant protection device according to Claim 15, **characterised in that** the annular foot (30) comprises at its free annular shoulder (32) joining means (34) for fastening it to the carrier part (18) and for retaining the air bag (12) at the edge.

17. Occupant protection device according to any one of Claims 1 to 16, **characterised in that** the surface layer (64) of the air bag (12) is covered with respect to the casing (24) by a protective film (72).

18. Occupant protection device according to any one of Claims 1 to 17, **characterised in that** the carrier part (18) comprises an annular bearing face (74), facing the casing (24), for accommodating the support cover (28) or the hinged cover (150) with a form-fit.

19. Occupant protection device according to any one of Claims 1 to 18, **characterised in that** the prefabricated air bag unit (14) is inserted in a locating part (26) of the carrier part (18) and concealed on the visible side by applying the casing (24).

20. Occupant protection device according to any one of Claims 1 to 19, **characterised in that** the casing (24) consists of a decorative skin (20), which faces the vehicle interior, and a foamed interlayer (22), which supports the decorative skin (20) on the carrier part (18), wherein the decorative skin (20) is weakened at the back in the area of the support cover (28) or the hinged cover (150) by tear lines for the passage of the air bag (12).

## Revendications

1. Dispositif de protection d'un occupant pour un véhicule, comprenant une unité de coussin gonflable de sécurité (14) composée d'un support de coussin gonflable de sécurité (10) et d'un coussin gonflable de sécurité plié (12), et une partie intérieure de véhicule constituée d'un support indéformable (18) et d'un habillage (24) pouvant être déchiré par le déclenchement du coussin gonflable de sécurité (12), notamment formée par un tableau de bord (16), qui est destinée à abriter l'unité de coussin gonflable de sécurité (14) en la dissimulant, **caractérisé en ce que** le support (10) du coussin gonflable de sécurité présente un couvercle de soutien (28) recouvrant un compartiment de rangement (70) pour le coussin gonflable de sécurité (12), et **en ce que** le couvercle de soutien (28) est lui-même recouvert par une couche de recouvrement (64) du coussin gonflable de sécurité (12) en direction de l'habillage (24).

2. Dispositif de protection d'un occupant pour un véhicule, comprenant une unité de coussin gonflable de sécurité (14) composée d'un support de coussin gonflable de sécurité (10) et d'un coussin gonflable de sécurité plié (12), et une partie intérieure de véhicule constituée par un support indéformable (18) et par un habillage (24) pouvant être déchiré par le déclenchement du coussin gonflable de sécurité (12), notamment formée par un tableau de bord (16), qui est destinée à abriter l'unité de coussin gonflable de sécurité (14) en la dissimulant, **caractérisé en ce que** le support (10) du coussin gonflable de sécurité présente un couvercle de soutien (28) recouvert en direction de l'habillage (24) par une couche de recouvrement (64) du coussin gonflable de sécurité (12), et **en ce qu'**un compartiment de rangement (70) pour le coussin gonflable de sécurité (12) faisant le tour du couvercle de soutien (28) est recouvert par un couvercle à charnière (50 ; 150) fixé de manière articulée sur le support (18) ou le couvercle de soutien.

3. Dispositif de protection d'un occupant selon la revendication 1 ou 2, **caractérisé en ce que** le support (10) du coussin gonflable de sécurité délimite un espace annulaire de préférence ouvert radialement qui fait office de compartiment de rangement (70) destiné à recevoir un bourrelet annulaire en accordéon (68) du coussin gonflable de sécurité (12).

4. Dispositif de protection d'un occupant selon la revendication 1 ou 3, **caractérisé en ce que** le couvercle de soutien (28) présente un rebord à charnière (50) de préférence circulaire pouvant être rabattu en direction de l'habitacle du véhicule, tout en libérant une zone de sortie (52) du compartiment de rangement (70) pour le coussin gonflable de sécurité (12).

5. Dispositif de protection d'un occupant selon l'une des revendications 2 à 4, **caractérisé en ce que** le rebord à charnière (50) ou le couvercle à charnière (150) est fixé de façon articulée par le biais d'une ligne d'affaiblissement (54) de la paroi.

6. Dispositif de protection d'un occupant selon l'une des revendications 2 à 5, **caractérisé en ce que** le rebord à charnière (50) ou le couvercle à charnière (150) est réalisé en forme d'anneau.

7. Dispositif de protection d'un occupant selon l'une des revendications 2 à 6, **caractérisé en ce que** le rebord à charnière (50) ou le couvercle à charnière (150) est divisé en plusieurs segments périphériques (58) par des entailles (56) pratiquées dans le rebord.

8. Dispositif de protection d'un occupant selon l'une des revendications 2 à 7, **caractérisé en ce que** le rebord à charnière (50) ou le couvercle à charnière (150) est rigidifié par des nervures de renforcement (62) sur sa face arrière opposée à l'habillage (24).

9. Dispositif de protection d'un occupant selon l'une des revendications 2 à 8, **caractérisé en ce que** le rebord à charnière (50) ou le couvercle à charnière (150) est fixé au couvercle de soutien (28) ou au support (18) par une couche de matière souple (60), de préférence un morceau de tissu collé ou inclus dans le moule.

10. Dispositif de protection d'un occupant selon l'une des revendications 1 à 9, **caractérisé en ce que** le support (10) du coussin gonflable de sécurité est muni dans une zone centrale (46) du couvercle de soutien (28) d'au moins une ouverture de passage, de préférence de plusieurs ouvertures de passage (48), afin de gonfler le coussin gonflable de sécurité (12).

11. Dispositif de protection d'un occupant selon la revendication 10, **caractérisé en ce que** les ouvertures de passage (48) destinées à commander le déploiement du coussin gonflable de sécurité (12) présentent différentes sections de passage et/ou orientations et/ou sont disposées en étant non uniformément réparties dans l'espace.

12. Dispositif de protection d'un occupant selon l'une des revendications 1 à 11, **caractérisé en ce que** le support (10) du coussin gonflable de sécurité présente une bride (30) faisant saillie au dos du couvercle de soutien (28), qui peut être assemblée fixement avec le support (18).

13. Dispositif de protection d'un occupant selon la revendication 12, **caractérisé en ce que** la bride (30) délimite un canal de passage (38) central par rapport à un bourrelet circulaire en accordéon (68) du coussin gonflable de sécurité (12), lequel canal peut être sollicité par du gaz au moyen d'un gazogène (40), afin de gonfler le coussin gonflable de sécurité (12).

14. Dispositif de protection d'un occupant selon la revendication 12 ou 13, **caractérisé en ce que** la bride (30) est renforcée par des nervures de raidissement (44) disposées en forme de quadrillage.

15. Dispositif de protection d'un occupant selon l'une des revendications 12 à 14, **caractérisé en ce que** la bride est formée par un pied annulaire (30) coudé radialement vers l'extérieur.

16. Dispositif de protection d'un occupant selon la revendication 15, **caractérisé en ce que** le pied annulaire (30) présente sur son épaulement annulaire libre (32) des moyens d'assemblage (34) pour le fixer au support (18) et pour maintenir le coussin gonflable de sécurité (12) au niveau du bord.

17. Dispositif de protection d'un occupant selon l'une des revendications 1 à 16, **caractérisé en ce que** la couche de recouvrement (64) du coussin gonflable de sécurité (12) est recouverte vis-à-vis de l'habillage (24) par un film de protection (72).

18. Dispositif de protection d'un occupant selon l'une des revendications 1 à 17, **caractérisé en ce que** le support (18) comporte une surface d'appui annulaire (74) tournée vers l'habillage (24), qui est destinée à recevoir avec un engagement positif le couvercle de soutien (28) ou le couvercle à charnière (150).

19. Dispositif de protection d'un occupant selon l'une des revendications 1 à 18, **caractérisé en ce que** l'unité de coussin gonflable de sécurité (14) préfabriquée est logée dans un réceptacle (26) du support (18) et est dissimulée par l'habillage (24).

20. Dispositif de protection d'un occupant selon l'une des revendications 1 à 19, **caractérisé en ce que** l'habillage (24) est composé d'une pellicule décorative (20) dirigée vers l'habitacle du véhicule et d'une couche intermédiaire (22) en mousse par le biais de laquelle la pellicule décorative (20) repose sur le support (18), la pellicule décorative (20) étant affaiblie sur l'envers, dans la zone du couvercle de soutien (28) ou du couvercle à charnière (150), par des lignes de déchirage pour le passage du coussin gonflable de sécurité (12).
